# FASCICULE DE BREVET EUROPEEN

(11) **EP 0 559 560 B1**
(45) Date de publication et mention de la délivrance du brevet: **08.01.1997**
(21) Numéro de dépôt: 93400551.3
(22) Date de dépôt: 03.03.1993
(51) Int. Cl.: G01M 9/04, F42B 35/00

(54) **Structure de positionnement et de stabilisation d'un objet en un point donné à l'intérieur d'un repère tridimensionnel**
Anordnung zur verstellbaren Aufhängung für ein Objekt in einem dreidimensionalen Bezugsraum
Structure for positioning and stabilizing an object in a threedimensional reference space

(30) Priorité: 06.03.1992 FR 9202724
(43) Date de publication de la demande: 08.09.1993
(73) Titulaire: AEROSPATIALE Société Nationale Industrielle, 75781 Paris Cédex 16 (FR)
(72) Inventeur: Bousquet, Jean-Claude, F-18000 Bourges (FR); Maupetit, Bernard, F-18390 Savigny en Septaine (FR); Auroux, Michel, F-18110 Fussy (FR); Goninet, Gérard, F-18000 Bourges (FR)
(74) Mandataire: Dubois-Chabert, Guy

(56) Documents cités:
- FR-A- 2 398 294
- US-A- 2 869 901
- US-A- 2 910 866
- PATENT ABSTRACTS OF JAPAN, vol. 10, no. 22 (P-424)(2079), 28 janvier 1986; & JP-A-60 174 924 (TOSHIBA) 09-09-1985

## Description

L'invention concerne une structure de positionnement et de stabilisation d'un objet en un point donné à l'intérieur d'un repère tridimensionnel. Cette structure permet notamment, le positionnement stabilisé en un point donné ou selon une loi de déplacement imposée, d'un objet tel qu'un missile ou plus généralement un engin tactique, dans une enceinte fermée, telle qu'une chambre anéchoïque.

Les engins tactiques modernes traversent des zones ennemies sur des dizaines ou des centaines de kilométres avant de détecter puis d'atteindre leurs cibles. Ces dernières étant protégées par des radars, il est nécessaire que les engins ne soient pas détectés avant de les atteindre. En conséquence, il faut que les engins soient furtifs. Afin de maîtriser et de réduire la signature radar de ces engins tactiques, il est important d'effectuer un certain nombre de mesures très précises à l'intérieur d'une chambre anéchoïque. Au cours de ces mesures, effectuées sur des engins grandeur nature, il faut prendre au sol un engin spécimen, le soulever et le positionner dans l'espace de façon aussi précise que possible et en toute sécurité, tout en garantissant son immobilité pendant la mesure et son déplacement dans l'espace entre des mesures successives.

On connaît déjà d'après l'art antérieur un dispositif constitué d'un mât dressé à l'intérieur d'une chambre anéchoïque et permettant de maintenir à une certaine distance du sol un missible spécimen, (voir notamment la revue "Air et Cosmos", n° 1352, pp. 34 et 35). Toutefois, ce mât présente une signature radar gênante pour les mesures effectuées sur ce missile. Cette signature radar supplémentaire risque en effet d'entraîner des erreurs de calcul. En outre, il est nécessaire d'utiliser un moyen de levage pour venir installer le missile spécimen au sommet du mât. Enfin, les changements de position du spécimen sont compliqués à réaliser.

On connaît également d'après l'art antérieur un dispositif comportant quatre barres métalliques fixées au plafond de la chambre anéchoïque et permettant de maintenir dans l'espace des objets tels qu'un avion de chasse, (voir le numéro de "Air et Cosmos", n° 1351, p. 11). Selon ce dispositif, les quatre tiges métalliques sont fixées en quatre points différents de l'avion et permettent de maintenir celui-ci selon une certaine assiette. Toutefois, lorsque l'on modifie l'incidence de l'avion par rapport au sol, le centre de gravité de celui-ci se déplace par rapport au repère à trois dimensions. Ce dispositif n'est donc pas applicable aux mesures que l'on souhaite effectuer sur des engins tactiques où il faut que le centre de gravité de l'engin reste au centre de la chambre anéchoïque tout au long des mesures et ce, malgré les changements d'incidence de l'engin.

Enfin, on connaît un dispositif à huit câbles permettant de positionner un missile ou un objet de forme allongée à l'intérieur d'une chambre anéchoïque. Dans ce cas, l'objet est maintenu par quatre câbles fixés dans sa partie supérieure ainsi qu'au plafond de la chambre et par quatre autres câbles fixés dans sa partie inférieure et reliés au plancher de cette chambre. Toutefois, lorsque l'on souhaite déplacer en rotation le missile, il faut avoir deux supports supérieur et inférieur, rigoureusement parallèles, permettant d'entraîner simultanément la rotation de la totalité des câbles, afin d'éviter que ceux-ci ne s'entourent les uns autour des autres.

L'invention a pour objet de remédier aux inconvénients précédemment cités.

A cet effet, l'invention concerne une structure de positionnement et de stabilisation d'un objet, en un point donné à l'intérieur d'un repère tridimensionnel, cette structure comprenant un support, deux paires d'élingues destinées à suspendre l'objet audit support et des moyens de réglage de la longueur de chaque élingue, ces deux paires d'élingues étant accrochées respectivement en quatre points de suspension différents du support et en deux paires de points de fixation, prévus à la surface de l'objet, respectivement de part et d'autre du plan vertical transversal passant par le centre de gravité de l'objet.

Selon les caractéristiques de l'invention, cette structure comprend au moins une cinquième élingue accrochée sur le support en un cinquième point de suspension différent des quatre premiers et sur l'objet en un cinquième point de fixation, ce cinquième point de fixation étant placé dans le plan vertical longitudinal passant par le centre de gravité de l'objet à positionner et d'un côté ou de l'autre du plan vertical transversal passant par le centre de gravité de l'objet, les deux paires de points de fixation étant également placées dans le plan vertical longitudinal passant par le centre de gravité de l'objet.

Ces élingues permettent en une seule opération de soulever l'objet, depuis le sol ou le chariot sur lequel il est introduit dans la chambre anéchoïque et de l'amener dans la position spatiale souhaitée. La cinquième élingue permet de stabiliser les mouvements de l'objet et d'éviter que celui-ci ne soit soumis à des oscillations prolongées. Enfin, lors des déplacements spatiaux de l'objet, cette cinquième élingue permet de repositionner le centre de gravité de l'objet concerné ou plus précisément de le maintenir dans une position fixe dans l'espace, malgré les déplacements dudit objet.

De préférence, le support peut tourner dans un plan horizontal autour d'un axe vertical passant par le cinquième point de suspension.

Ceci permet de faire pivoter l'objet testé de 360°.

De façon avantageuse, les moyens de réglage de la longueur de chaque élingue comprennent un tambour autour duquel est enroulé ladite élingue et un moteur moto-réducteur entraînant le mouvement de rotation dudit tambour.

Grâce à ce dispositif mécanique classique, la longueur des élingues peut être ajustée pour obtenir une précision de positionnement de l'objet inférieure au millimètre en tous points de l'objet.

Enfin, de façon également avantageuse, les moyens de réglage de la longueur de chaque élingue sont connectés à des moyens d'asservissement d'appareils de mesure de la position de l'objet par rapport au repère tridimensionnel, ces moyens d'asservissement comprenant un calculateur et permettant d'agir sur lesdits moyens de réglage.

Ceci permet de simplifier considérablement les opérations de manipulation effectuées sur l'objet concerné.

L'invention sera mieux comprise à la lecture de la description suivante d'un mode de réalisation préférentiel donné à titre d'exemple illustratif et non limitatif, cette description étant faite en faisant référence aux dessins joints, dans lesquels :
- la figure 1 est un schéma d'ensemble de la structure de positionnement selon l'invention placée à l'intérieur d'un repère à trois dimensions,
- la figure 2 est un schéma illustrant un objet positionné selon l'invention,
- les figures 3 et 4 sont des schémas illustrant les déplacements de l'objet à positionner,
- la figure 5 est une vue de dessus du support de la structure de positionnement selon l'invention,
- la figure 6 est une vue en coupe du support selon la ligne VI-VI de la figure 5.

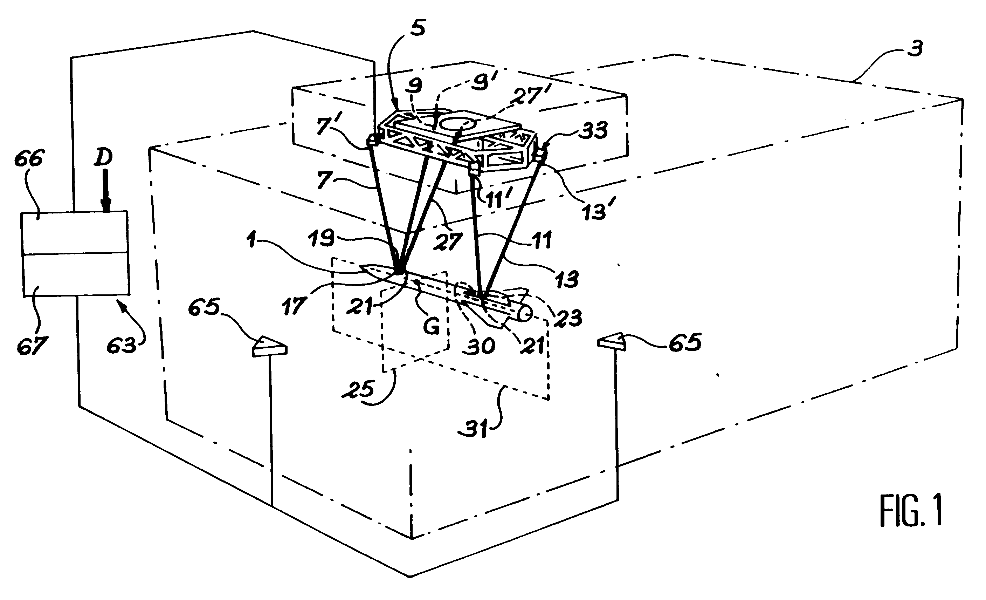

La figure 1 illustre une structure de positionnement d'un objet 1, ici représenté par un missile, dans un repère tridimensionnel référencé de manière générale 3. Ce repère 3 est par exemple une chambre anéchoïque dont les murs, le sol et le plafond constituent les trois dimensions du repère. La structure de positionnement selon l'invention s'applique plus particulièrement à cette chambre anéchoïque, toutefois, il est bien évident que la même structure pourrait être utilisée dans une toute autre enceinte et pour des buts différents.

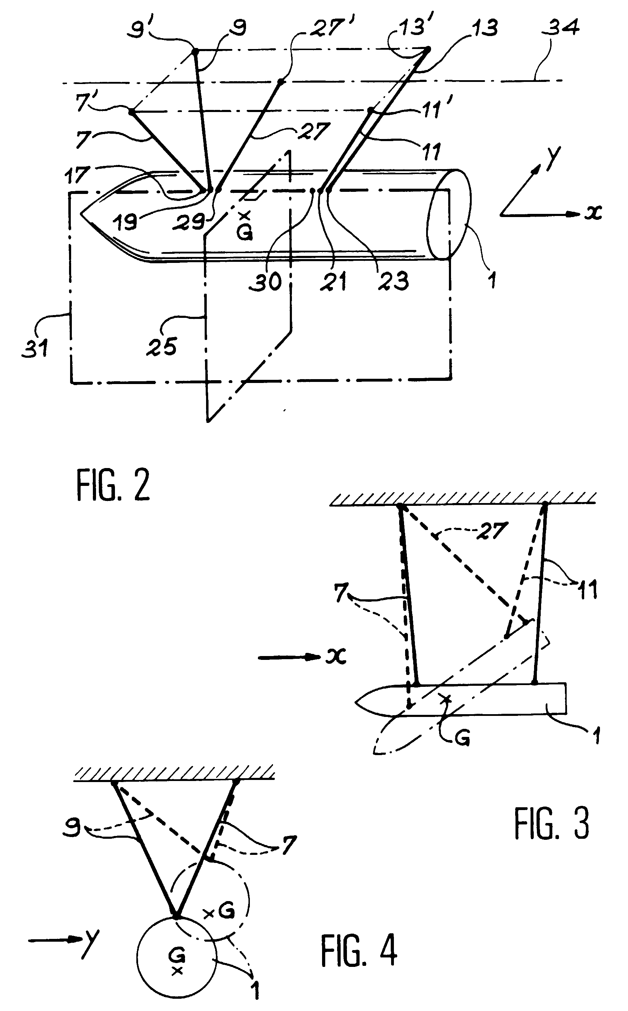

Cette structure de positionnement comprend un support 5 sous lequel l'objet 1 est suspendu au moyen d'une première paire d'élingues 7, 9 et d'une deuxième paire d'élingues 11, 13. Comme illustré par exemple en figure 1, la première paire d'élingues 7, 9 est fixée sur la partie avant de l'objet, par deux points de fixation 17, 19, tandis que la deuxième paire d'élingues 11, 13 est fixée sur la partie arrière de cet objet, par deux autres points de fixation 21, 23 (voir également la figure 2). Plus généralement, ces deux paires de points de fixation sont réparties respectivement de part et d'autre du plan vertical transversal 25 passant par le centre de gravité G de l'objet. Les deux paires de points de fixation 17, 19 et 21, 23 sont des points d'accrochage ou crochets prévus à la surface du missile specimen 1. Le centre de gravité G a été représenté de façon arbitraire légèrement décalé vers l'avant de l'objet 1.

Ces quatre élingues 7, 9, 11, 13 sont fixées sur le support 5, en quatre points de suspension différents, référencés respectivement 7', 9', 11' et 13'.

En outre, l'objet 1 est également fixé par au moins une cinquième élingue 27 accrochée au support 5 par un cinquième point de suspension 27' et fixée sur l'objet 1 au niveau d'un cinquième point de fixation. Ce cinquième point de fixation est situé, soit à l'avant, soit à l'arrière de l'objet 1 par rapport au plan traversal 25, et il est référencé respectivement soit 29, soit 30. On peut également prévoir sur la surface de l'objet 1, deux crochets 29 et 30 et choisir d'accrocher la cinquième élingue sur l'un ou l'autre des crochets au moment des mesures. Ce point 29 ou 30 est placé dans le plan vertical longitudinal 31 incluant le centre de gravité G de l'objet 1. De plus, les deux paires de points de fixation 17, 19 et 21, 23 sont également réparties sur le plan vertical longitudinal 31.

Enfin, cette structure de positionnement comprend des moyens de réglage de la longueur de chacune des élingues, ces moyens de réglage étant identiques et référencés de manière générale 33. Ils seront décrits plus en détail ultérieurement. Ils sont fixés sur le support 5.

L'utilité de la cinquième élingue va maintenant être expliquée plus en détail en faisant référence aux figures 2 à 4.

La figure 2 est un schéma illustrant la suspension de l'objet 1 par l'intermédiaire des cinq élingues. La position de la cinquième élingue 27 et l'orientation de l'objet dans l'espace ont été choisies de façon arbitaire. Si l'objet 1 n'était maintenu que par quatre élingues lorsqu'il est hissé depuis le sol jusqu'à la position de l'espace où l'on souhaite le placer, il serait animé d'un mouvement d'oscillation dans le sens longitudinal (schématisé par la flèche x). L'oscillation dans le sens longitudinal n'est pas limitée et l'objet peut osciller pendant un certain temps avant de trouver sa position d'équilibre. La cinquième élingue de fixation 27 permet donc de limiter rapidement l'oscillation dans le sens longitudinal.

Lorsqu'on effectue les mesures de signature radar, il est indispensable d'effectuer celles-ci lorsque l'objet 1 ou le missile présente des incidences différentes par rapport au sol. Lors des déplacements de l'objet 1, il est cependant nécessaire que le centre de gravité G de l'objet ne soit pas déplacé par rapport au repère à trois dimensions pour des raisons d'homogénéité et d'illumination radar. La cinquième élingue 27 permet non seulement d'aider à positionner l'objet 1 mais également de maintenir ou de recentrer son centre de gravité G. En fonction de l'incidence souhaitée de l'objet, l'un des points de fixation 29 ou 30 sera choisi et utilisé.

La figure 3 est un schéma illustrant le rôle de la cinquième élingue dans le déplacement du centre de gravité G dans le sens longitudinal (flèche x). Sur ce schéma, seule une élingue de chaque paire est représentée, par exemple les élingues 7 et 11. On admet que les deux élingues de chaque paire sont de même longueur et se déplacent de façon symétrique. On admet également que le centre de gravité G n'est pas situé à égale distance des points de fixation 17 et 21, mais légèrement vers l'avant de l'objet.

Dans la première position représentée en traits pleins, l'objet est horizontal. Si on souhaite le faire pivoter, de façon à lui donner une incidence positive par rapport au sol, il sera nécessaire de raccourcir ou d'allonger la longueur d'une des paires d'élingues. On a représenté en traits pointillés une position arbitraire de l'objet 1, dans laquelle il est incliné par rapport à l'horizontale, son centre de gravité G n'ayant pas bougé. On constate qu'il n'est pas possible d'obtenir cette position uniquement avec quatre élingues, car alors l'objet 1 ne serait pas à sa position d'équilibre. La cinquième élingue 27 permet justement d'obtenir ce déplacement de l'objet 1, sans déplacer le centre de gravité G.

Comme illustré en figure 4, chaque paire d'élingues 7, 9 (ou 11, 13) permet de déplacer le centre de gravité G de l'objet 1 dans un plan perpendiculaire à son axe longitudinal. Ce déplacement du centre de gravité G (passage de la position en traits pleins à la position en traits mixtes), s'effectue en allongeant ou en raccourcissant l'une des élingues d'une paire (ici en raccourcissant l'élingue 7).

On comprend aisément qu'en combinant les changements de longueur de toutes les élingues, on peut arriver à déplacer le centre de gravité G dans la totalité de l'espace ou au contraire à le maintenir immobile, malgré les déplacements de l'objet.

On pourrait également avoir plus de cinq élingues.

De façon avantageuse et comme illustré en figure 2, les quatre points de suspension 7', 9', 11' et 13' sont disposés aux quatre coins d'un parallélogramme à angle droit et de préférence dans le même plan. En général, pour chaque paire d'élingues, les deux points de suspension d'une paire 7', 9', respectivement 11', 13' sont placés à équidistance d'une droite horizontale 34 issue du plan vertical longitudinal 31 incluant le centre de gravité G de l'objet. En outre, le cinquième point de suspension 27' est avantageusement placé à égale distance des quatre autres points et si possible dans le même plan horizontal. Toutefois, ce cinquième point de suspension 27' pourrait être déplacé verticalement.

De plus, le support 5 supportant les extrémités des élingues de fixation peut tourner dans un plan horizontal autour d'un axe vertical passant par le cinquième point de suspension 27'.

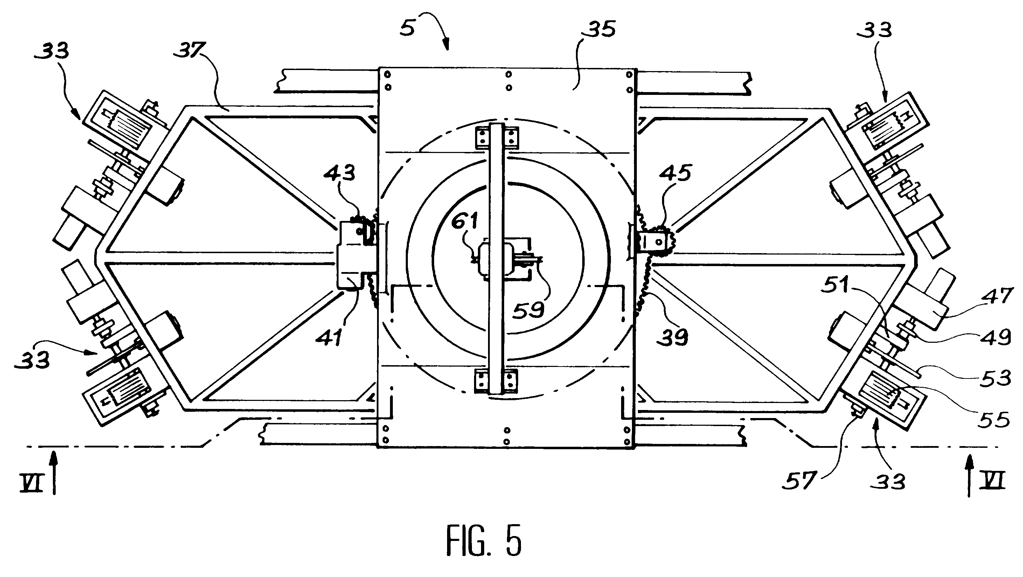

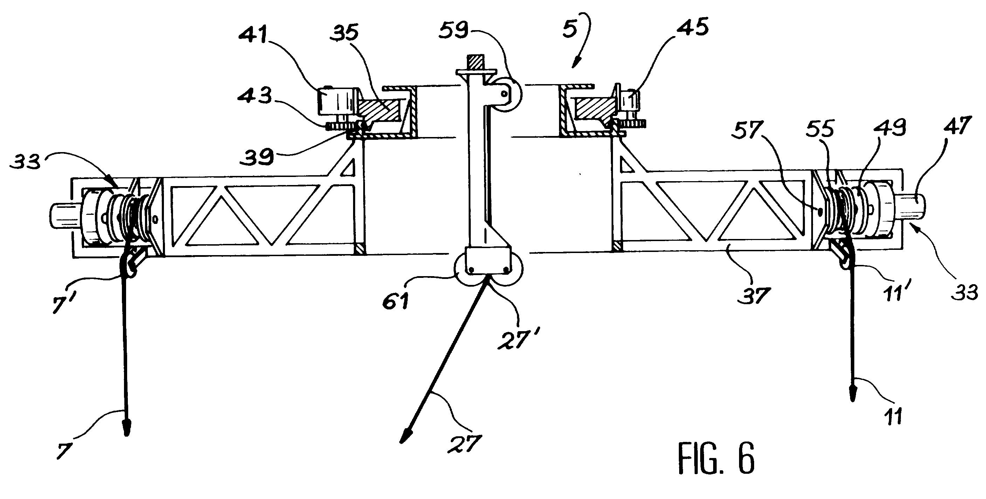

Les figures 5 et 6 illustrent le support 5 et les moyens de réglage 33 de la longueur de chaque élingue. Le support 5 comprend un bâti fixe 35 accroché au plafond de la chambre anéchoïque et une charpente mobile 37. La charpente mobile 37 présente une couronne dentée 39. Un moteur 41 monté sur le bâti fixe 35 fait tourner une roue dentée 43 qui entraîne à son tour la couronne dentée 39. Ce dispositif autorise la rotation de la charpente 37 et des moyens de réglage 33, de 360° autour de l'axe passant par le point de suspension 27'. Un codeur 45 permet de détecter l'angle de rotation de la charpente 37.

Les cinq moyens de réglage 33 de la longueur des élingues étant identiques, un seul sera décrit, celui supportant l'élingue 11. Ce moyen de réglage 33 comprend successivement un moteur 47, de préférence motoréducteur, un accouplement 49, un palier 51, un frein 53, un tambour 55 sur lequel est entouré l'élingue 11 et un codeur 57 permettant de détecter le nombre de tours effectués par le tambour 55. La précision du mouvement de rotation du tambour est inférieure au millimètre, de façon à obtenir un positionnement de l'objet 1 dans l'espace, inférieur à 1 mm compte tenu de l'étirement éventuel des élingues.

Les moyens de réglage 33 de la longueur de l'élingue centrale 27 différent des quatre autres en ce qu'ils comprennent des poulies de renvoi 61 supplémentaires afin d'éviter que l'élingue 27 ne sorte de la poulie de renvoi 59 présente devant le tambour 55, lorsque l'incidence de cette élingue varie.

De façon avantageuse, toutes les élingues sont réalisées en fils de polyamide, connu sous le nom de marque déposée KEVLAR, en fils métalliques ou en tout autre matériau présentant les propriétés de résistance et de souplesse souhaitées. Il est important que ces élingues soient extrêmement résistantes à la traction. A titre d'exemple purement illustratif, on peut utiliser des élingues d'un diamètre de 6 mm pour soulever une charge de 1 tonne. En outre, ces élingues doivent être suffisamment souples pour s'enrouler facilement autour des tambours 55 des moyens de réglage 33.

Selon le mode de réalisation préféré de l'invention illustré en figure 1, les moyens de réglage 33 de la longueur de chaque élingue sont connectés à des moyens d'asservissement 63 eux-mêmes connectés à au moins deux appareils de mesure 65 de la position de l'objet 1 par rapport au repère tridimensionnel. (Une seule connexion a été représentée pour simplifier la figure). Ces appareils de mesure 65 sont généralement des théodolites disposés autour de l'objet 1 et permettant d'effectuer des mesures par rapport à deux mires prévues à cet effet sur l'objet précité. Les moyens d'asservissement 63 comprennent de façon avantageuse un calculateur 66 et un comparateur 67. Le calculateur 66 permet à l'expérimentateur d'introduire des données D concernant la position spatiale de l'objet 1, ces donnée sont par exemple l'inclinaison de l'objet 1 par rapport au sol et aux différentes parois de la chambre anéchoïque et la position du centre de gravité G de l'objet 1 par rapport au repère tridimensionnel formé par cette chambre. Le comparateur 67 permet de comparer ces valeurs de mesure prédéterminées avec les valeurs fournies par les théodolites 65. De façon plus générale, ces moyens d'asservissement 63 permettent en fonction de la comparaison effectuée entre ces valeurs, d'agir sur le moteur 47 des moyens de réglage 33 de la longueur de chaque élingue, de façon à enrouler ou dérouler plus ou moins celle-ci en fonction de la position finale de l'objet souhaitée.

## Revendications

1. Structure de positionnement et de stabilisation d'un objet (1), en un point donné à l'intérieur d'un repère tridimensionnel, comprenant :
- un support (5),
- deux paires d'élingues (7, 9 ; 11, 13) destinées à suspendre l'objet (1) audit support (5), et
- des moyens de réglage (33) de la longueur de chaque élingue,
ces deux paires d'élingues (7, 9 ; 11, 13) étant accrochées respectivement en quatre points de suspension (7', 9', 11', 13') différents du support (5) et en deux paires de points de fixation (17, 19 ; 21, 23) prévus à la surface de l'objet (1), respectivement de part et d'autre du plan vertical transversal (25) passant par le centre de gravité (G) de l'objet (1), caractérisé en ce que cette structure comprend au moins une cinquième élingue (27) accrochée sur le support (5) en un cinquième point de suspension (27') différent des quatre premiers et sur l'objet en un cinquième point de fixation(29, 30), ce cinquième point de fixation (29, 30) étant placé dans le plan vertical longitudinal (31) incluant le centre de gravité (G) de l'objet à positionner (1) et d'un côté ou de l'autre du plan vertical transversal (25), les deux paires de points de fixation (17, 19 ; 21, 23) étant également placées dans le plan vertical longitudinal (31).

2. Structure de positionnement selon la revendication 1, caractérisée en ce que les quatre points de suspension (7', 9' ; 11', 13') sont situés aux quatre coins d'un parallélogramme à angle droit.

3. Structure de positionnement selon la revendication 2, caractérisée en ce que le cinquième point de suspension (27') est placé à égale distance des quatre autres points de suspension (7', 9' ; 11', 13').

4. Structure de positionnement selon l'une des revendications précédentes, caractérisée en ce que les quatre premiers points de suspension (7', 9', 11', 13') du support (5) sont situés dans un même plan horizontal.

5. Structure de positionnement selon l'une des revendications précédentes, caractérisée en ce que le support (5) peut tourner dans un plan horizontal, autour d'un axe vertical passant par le cinquième point de suspension (27').

6. Structure de positionnement selon la revendication 1, caractérisée en ce que les moyens de réglage (33) de la longueur de chaque élingue (7, 9, 11, 13, 27) comprennent un tambour (55) autour duquel est enroulé ladite élingue (7, 9, 11, 13, 27) et un moteur moto-réducteur (47) entraînant le mouvement de rotation dudit tambour (55).

7. Structure de positionnement selon l'une quelconque des revendications précédentes, caractérisée en ce que toutes les élingues (7, 9, 11, 13, 27) sont réalisés en fils de polyamide ou en fils métalliques.

8. Structure de positionnement selon l'une quelconque des revendications précédentes, caractérisée en ce que les moyens de réglage (33) de la longueur de chaque élingue (7, 9, 11, 13, 27) sont connectés à des moyens d'asservissement (63) d'appareils de mesure (65) de la position de l'objet (1) par rapport au repère tridimensionnel, ces moyens d'asservissement (63) comprenant un calculateur (66) et permettant d'agir sur lesdits moyens de réglage (33).

9. Structure de positionnement selon l'une quelconque des revendicatons précédentes, caractérisée en ce que le repère tridimensionnel est constitué par une chambre anéchoïque (3).

## Patentansprüche

1. Anordnung zum Positionieren und Stabilisieren eines Objekts (1) in einem bestimmten Punkt innerhalb eines dreidimensionalen Bezugssystems, umfassend:
- einen Träger (5),
- zwei Paare Schlingen (7, 9; 11, 13), um besagtes Objekt (1) am Träger (5) aufzuhängen, und
- Einstelleinrichtungen (33) der Länge jeder Schlinge,
wobei diese beiden Schlingenpaare (7, 9; 11, 13) jeweils aufgehängt sind an vier verschiedenen Aufhängungspunkten (7', 9', 11', 13') des Trägers (5) und an zwei Paaren von Befestigungspunkten (17, 19; 21, 23), vorgesehen an der Oberfläche des Objekts beziehungsweise auf beiden Seiten der vertikalen Querebene (25), die durch den Schwerpunkt (G) des Objekts (1) verläuft,
**dadurch gekennzeichnet,**
daß diese Anordnung wenigstens eine fünfte Schlinge (27) umfaßt, am Träger (5) festgemacht in einem fünften, von den vier ersten verschiedenen Aufhängungspunkt (27'), und am Objekt in einem fünften Befestigungspunkt (29, 30), wobei dieser fünfte Befestigungspunkt (29, 30) in der den Schwerpunkt (G) des zu positionierenden Objekts (1) enthaltenden vertikalen Längsebene (31) angeordnet ist, auf der einen oder der anderen Seite der vertikalen Querebene (25), und die beiden Befestigungspunktpaare (17, 19; 21, 23) sich ebenfalls in der vertikalen Längsebene (31) befinden.

2. Positionierungsanordnung nach Anspruch 1, dadurch gekennzeichnet, daß die vier Aufhängungspunkte (7', 9'; 11', 13') sich an den vier Ecken eines Rechtecks bzw. rechtwinkligen Parallelogramms befinden.

3. Positionierungsanordnung nach Anspruch 2, dadurch gekennzeichnet, daß der fünfte Aufhängungspunkt (27') abstandsgleich zu den vier anderen Aufhängungspunkten (7', 9'; 11', 13') angeordnet ist.

4. Positionierungsanordnung nach einem der vorangehenden Ansprüche, dadurch gekennzeichnet, daß die vier ersten Aufhängungspunkte (7', 9', 11', 13') des Trägers (5) sich in ein und derselben horizontalen Ebene befinden.

5. Positionierungsanordnung nach einem der vorangehenden Ansprüche, dadurch gekennzeichnet, daß der Träger (5) sich in einer horizontalen Ebene drehen kann, um eine vertikale Achse herum, die durch den fünften Aufhängungspunkt (27') verläuft.

6. Positionierungsanordnung nach Anspruch 1, dadurch gekennzeichnet, daß die Einstelleinrichtungen (33) der Länge jeder Schlinge (7, 9, 11, 13, 27) eine Trommel (55) umfaßt, um die besagte Schlinge (7, 9, 11, 13, 27) herumgewickelt ist, und einen Getriebemotor (47), der besagte Trommel (55) in Drehung versetzt.

7. Positionierungsanordnung nach einem der vorangehenden Ansprüche, dadurch gekennzeichnet, daß alle Schlingen (7, 9, 11, 13, 27) aus Polyamidfäden oder Metalldrähten hergestellt sind.

8. Positionierungsanordnung nach einem der vorangehenden Ansprüche, dadurch gekennzeichnet, daß die Einstelleinrichtungen (33) der Länge jeder Schlinge verbunden sind mit Regeleinrichtungen (63) von Meßgeräten (65) der Position des Objekts (1) in bezug auf das dreidimensionale Bezugssystem, wobei diese Regeleinrichtungen (63) einen Rechner (66) umfassen und ermöglichen, auf die Einstelleinrichtungen (33) einzuwirken.

9. Positionierungsanordnung nach einem der vorangehenden Ansprüche, dadurch gekennzeichnet, daß das dreidimensionale Bezugssystem durch eine echofreie bzw. schalltote Kammer (3) gebildet wird.

## Claims

1. Structure for the positioning and stabilization of an object (1), at a given point within a three-dimensional coordinate system incorporating a support (5), two pairs of slings (7, 9; 11, 13) for suspending the object (1) on said support (5) and means (33) for regulating the length of each sling, said two pairs of slings (7, 9; 11, 13) being respectively attached at four different suspension points (7', 9',11', 13') of the support (5) and at two pairs of fixing points (17, 19; 21, 23) provided on the surface of the object (1), respectively on either side of the transverse vertical plane (25) passing through the centre of gravity (G) of the object (1), characterized in that said structure comprises at least one fifth sling (27) attached to the support (5) at a fifth suspension point (27') different from the first four suspension points and on the object at a fifth fixing point (29, 30), which is located in the longitudinal vertical plane (31) including the centre of gravity (G) of the object (1) to be positioned and on one or other side of the transverse vertical plane (25), the two pairs of fixing points (17, 19; 21, 23) also being placed in the longitudinal vertical plane (31).

2. Positioning structure according to claim 1, characterized in that the four suspension points (7', 9', 11', 13') are located at the four angles of a right-angled parallelogram.

3. Positioning structure according to claim 2, characterized in that the fifth suspension (27') is positioned equidistantly of the four other suspension points (7', 9', 11', 13').

4. Positioning structure according to any one of the preceding claims, characterized in that the four first suspension points (7', 9', 11', 13') of the support (5) are located in the same horizontal plane.

5. Positioning structure according to any one of the preceding claims, characterized in that the support (5) can rotate in a horizontal plane about a vertical axis passing through the fifth suspension point (27').

6. Positioning structure according to claim 1, characterized in that the means (33) for regulating the length of each sling (7, 9, 11, 13, 27) incorporate a drum (55) about which is wound the said sling (7, 9, 11, 13, 27) and a geared motor (47) rotating the said drum (55).

7. Positioning structure according to any one of the preceding claims, characterized in that all the slings (7, 9, 11, 13, 27) are formed by polyamide threads or metal wires.

8. Positioning structure according to any one of the preceding claims, characterized in that the means (33) for regulating the length of each sling (7, 9, 11, 13, 27) are connected to servocontrol means (63) of apparatuses (65) for measuring the position of the object (1) relative to the three-dimensional coordinate system, said servocontrol means (63) incorporating a computer (66) and making it possible to act on the said regulating means (33).

9. Positioning structure according to any one of the preceding claims, characterized in that the three-dimensional coordinate system is constituted by an anechoic room (3).
